# EUROPEAN PATENT APPLICATION

(11) **EP 2 525 535 A1**
(43) Date of publication of application: **21.11.2012**
(21) Application number: 11290235.8
(22) Date of filing: 19.05.2011
(51) Int. Cl.: H04L 12/56

(54) **A traffic manager and method of controlling the traffic manager**

(71) Applicant: Alcatel Lucent, 75007 Paris (FR)
(72) Inventor: Bunse, Stephan, 70565 Stuttgart (DE)
(74) Representative: Zinsinger, Norbert

(57) **Abstract**

The present invention concerns a traffic manager (1) of a packet based communication network and a method of controlling the traffic manager (1). The traffic manager (1) comprises a processing unit (12) of a chip (10) of the traffic manager (1), one or more first memory units (50) electrically connected via electrical connection lines (51) of a circuit board with said chip (10) and one or more queues assigned to respective input data streams. At least one of said one or more queues is provided by a second memory unit (40) or by a second memory unit (40) and the one or more first memory units (50), whereby the second memory unit (40) has a higher memory bandwidth than the one or more first memory units (50).

## Description

### Field of Invention

The present invention relates to a traffic manager and a method of controlling the traffic manager.

### Background

In a packet based communication network a traffic manager is used to receive input data streams and to adapt them to the properties of the outputs by buffering and dropping packets/cells. The buffering needed for traffic management must operate at high speeds. In current solutions, buffering is provided by DRAMs (Dynamic Random Access Memories).To enable the write and read processes to and from the DRAMs the memory bandwidth of the DRAMs needs to be at least double the input data stream bandwidth. In current implementations, the bandwidth to the memory may be more than 2.5 times the input data rate, so that for a 100G line card a memory bandwidth of more than 250 Gb/s is used.

### Summary

The objective of the present invention is to provide an improved buffering concept for traffic management.

This objective of the present invention is achieved by a traffic manager of a packet based communication network comprising a processing unit of a chip of the traffic manager, one or more first memory units electrically connected via electrical connection lines of a circuit board with said chip, a second memory unit and one or more queues assigned to respective input data streams, wherein at least one of said one or more queues being provided by the second memory unit or provided by the second memory unit and the one or more first memory units, whereby the second memory unit has a higher memory bandwidth than the one or more first memory units.

The objective of the present invention is further achieved by a method of controlling a traffic manager of a packet based communication network, comprising a processing unit of a chip of said traffic manager and one or more first memory units electrically connected via electrical connection lines of a circuit board with said chip, the method comprising the steps of assigning one or more queues to respective input data streams and of providing at least one of the one or more queues by a second memory unit or by a second memory unit and the one or more first memory units, whereby the second memory unit has a higher memory bandwidth than the one or more first memory units.

The one or more first memory units, preferably one or more DRAM(s) respectively, have a high buffer memory capacity, but low memory bandwidth and are therefore named slow memory units. The second memory unit, preferably a memory unit of the chip, has a low buffer memory capacity, but high memory bandwidth, and is named fast memory unit. Much data can be written and read to and from the second memory unit within a short time period, i.e. the data rate to and from the second memory unit is high. By the use of a second memory unit as a buffer memory beside the one or more first memory units used as buffer memories, not all data has to be written to the one or more first memory units, whereby the memory bandwidth to the one or more first memory units is reduced.

Furthermore, the power loss which occurs by the writing and reading the data to and from one or more first memory units is reduced by the use of the second memory unit as buffer memory. Memory elements for the implementation of queues which are located in the fast memory are intended for short term buffering, realized by prioritized serving of those queues with head elements in the fast memory and by writing incoming data with low delay bounds to memory elements of the fast memory rather than to the slow memory. As the memory bandwidth to the one or more first memory units is reduced, the number of the pins providing the electrical connection between the chip including the traffic manager and the first memory units can be reduced enabling first memory units of smaller spatial dimensions and of lower cost for the components, for packaging and housing.

Further advantages are achieved by the embodiments of the invention indicated by the dependent claims.

Preferably, the one or more first memory units can be implemented as one or more DRAMs (Dynamic Random Access Memories) respectively and the second memory unit can be implemented as a memory unit on the chip - which is therefore called on-chip memory - or as a SRAM (Static Random Access Memory). In the following, when the implementation by DRAMs, an on-chip memory and a SRAM is described, this is done rather for exemplary reasons without limiting the scope of the invention.

In a preferred embodiment, the traffic manager is adapted to implement each of said one or more queues as a linked list of a plurality of elements, wherein each element of the queue comprises payload data and a pointer to the next element of the queue. The implementation as a linked list allows for a flexible assignment of the memory segments to the different queues.

In a preferred embodiment, the traffic manager is adapted to serve a queue of said one or more queues with high priority, if the first element of the queue uses the second memory unit, and/or to serve a queue of said one or more queues with low priority, if the first element of the queue uses the one of more first memory units. By the first element of the queue using either the second memory unit or the one or more first memory units, is indicated if the queue is served with high priority or with low priority respectively. The first element of the queue is that element of the queue that will be the next element served by the traffic manager. It was found that this concept improves the performance of the buffer system.

In a preferred embodiment, the traffic manager is adapted to serve a queue of high priority more frequently than a queue of low priority, in particular between 1.5 - 3 times more frequently.

In a preferred embodiment, the traffic manager is adapted to distribute the data of at least one of the one or more queues to both, the second memory unit and to one or more first memory units, whereby each one of said queues is formed by elements stored in said second memory unit and by elements stored in the one or more first memory units. By the writing of the data of the input data stream in the second memory unit or in the second memory unit and in the one or more first memory units, the flexibility of the traffic management and the buffering therein is increased, because according to changing of the input data streams in priority class and data rate, the data can be distributed to both, the second memory unit and the one or more first memory units.

In a preferred embodiment, the traffic manager is adapted to receive a first input data stream of said input data streams and a second input data stream of said input data streams, the first input data stream and the second input data stream having the same priority class, to write - within a first time period - the data of the queue assigned to the first input data stream in the second memory unit, whereby memory space of the second memory unit is used for said queue, and to write - within the first time period - the data of the queue assigned to the second input data stream in the one or more first memory units, whereby memory space of the one of more first memory units is used for said queue. Preferably, the queue or the part of the queue provided by the second memory unit is served more frequently, i.e. with a higher priority than the queue or the part of the queue provided by the one or more first memory units. Thereby the advantage is achieved that the one of more queues in the second memory unit are kept shorter so that the delay times are shortened.

In case the input data streams have the same priority class, in particular in case they provide the same kind of data, the advantages of a prioritised serving of the input data streams are achieved by writing - within a first time period - the data of the queue assigned to a first input data stream of the input data streams in the second memory unit and by writing - within the first time period - the data of the queue assigned to a second input data stream of the input data streams in the one or more first memory units, whereby memory space of the respective memory is used for the respective queue assigned to the respective input data stream.

Preferably, within the first time period, the queue assigned to the first input data stream is served more frequently than the queue assigned to the second input data stream even the first and the second input data stream having the same priority class.

Preferably, the traffic manager is adapted to rearrange the writing of the data of the queues assigned to the first and second input data stream in the second memory unit and in the one or more first memory units, respectively, to keep long term fairness within a second time period that is greater than the first time period.

To achieve long-term fairness of the serving of the queues provided by the second memory unit and the one or more first memory units, respectively, the traffic manager - within a second time period greater than the first time period - rearranges the writing of the data to the queues assigned to the first and second input data stream in the second memory unit and in the one or more first memory units, respectively, by reallocating new incoming data of the input data streams in a buffer memory different from that which has been used by the respective queue in the first time period.

In a preferred embodiment, the traffic manager is adapted to write new incoming data of the first and the second input data stream either in the first memory unit or the second memory unit and link them with the rest of the queue assigned to the first and second input data stream, respectively.

In a preferred embodiment, the traffic manager is adapted to rearrange the writing of the data of one or more of the queues by writing the data of a queue, of which the data has been written in the second memory unit, in the one or more first memory units, and/or by writing the data of a queue, of which the data has been written in the one or more first memory units, in the second memory unit. By the rearrangement of the data of the one or more queues, the prioritised serving of the respective queues are changed in the way that the queues which have been served with high priority/ more frequently in a first time period are served with low priority/ less frequently in the following period and the queues which have been served with low priority/ less frequently in a first time period are served with high priority/ more frequently in the following period

In a preferred embodiment, the traffic manager is adapted to rearrange the writing of the data of one or more of the queues at regular time intervals. The rearrangement of the writing of the data of the one or more queues, i.e. the changing of the priority of the serving of the respective queues can be made at regular time intervals which are predetermined, in particular according to the demands of the manufacturer or telecom operator of the traffic manager.

In a preferred embodiment, the traffic manager is adapted to rearrange the writing of the data of one or more of the queues according to the memory bandwidth of the second memory unit and/or of the one or more first memory units. The rearrangement of the writing of the data to the one or more queues can be made according to the memory bandwidth of the second memory unit and/or of the one or more first memory units, whereby the changing of the priority can be made, in particular in order not to overburden the memory bandwidth of a buffer memory to avoid overload situation which leads to packet loss and in the same time to use the memory bandwidth in particular of the second memory unit as far as possible, because thereby a high throughput through the traffic manager is achieved.

In a preferred embodiment, the traffic manager is adapted to rearrange the writing of the data of one or more of the queues according to the memory occupancy of the second memory unit and/or of the one or more first memory units. By taking the memory occupancy of the buffer memories into account, the advantage of increased throughput through the traffic manager is provided as far as possible by using the memory capacity of the buffer memories as far as possible while avoiding packet loss at the same time.

In a preferred embodiment, the traffic manager is adapted to write the data of the queues assigned to input data streams of a high priority class in the second memory unit, in particular the data of queues assigned to the high value services as video conferencing, VoIP, partly payTV. In case input data streams contain data of input data streams of a high priority class according to the type of data, in particular real time data which are expected to leave the traffic manager as soon as possible to avoid packet loss and to keep the quality of service guaranteed to this kind of data, the data of the queues assigned to the respective input data streams are written in the second memory unit, where they are served with priority, i.e. more frequently than the data of the queues written in the one or more first memory units. Among these input data streams of a high priority class are high value services as video conferencing, VoIP, partly payTV.

In a preferred embodiment, in particular in case of a prioritised serving of queues of input data streams having the same priority class when incoming in the traffic manager and the prioritised treatment is provided by the traffic manager to achieve the improved traffic management, in order to equalize the unfairness between the queues due to the prioritised serving of the queues of which the data is written in the second memory unit over the queues of which the data is written in the one or more first memory units, the one or more high priority queues can be operated with a higher packet drop rate - either using real dropping or marking packets as dropped, which causes the TCP senders to reduce their transmission rate.

### Brief Description of the Figures

The features and advantages of the present invention will be more completely understood by reference to the following detailed description when taken in conjunction with the accompanying drawings, wherein:
- Fig.1: is a coarse block diagram showing the overall structure of a traffic manager;
- Fig. 2: is a detailed block diagram showing the inner structure of the traffic manager and the method of controlling the traffic manager;
- Fig. 3: is a detailed block diagram showing the inner structure of the traffic manager and the method of controlling the traffic manager and
- Fig. 4: is a detailed block diagram showing the inner structure of the traffic manager and the method of controlling the traffic manager.

### Description of Embodiments

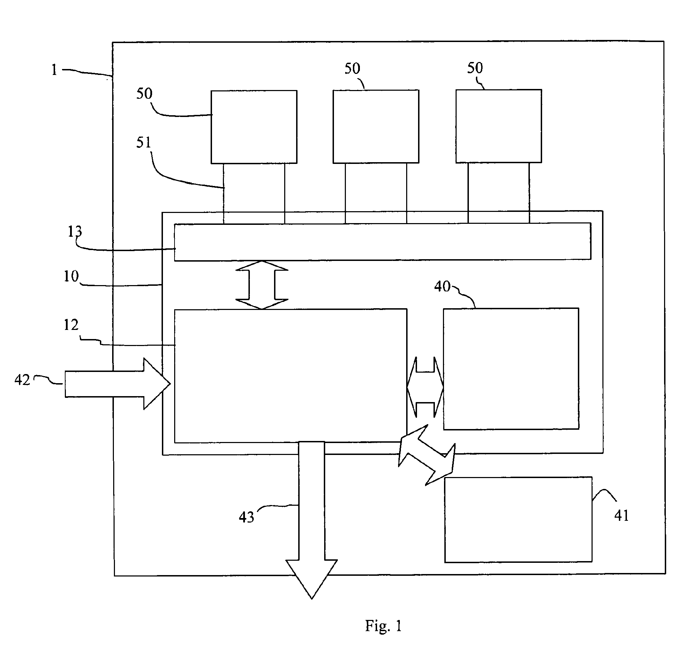

Fig. 1 shows the traffic manager 1 of a packet based communication network comprising a chip 10 and one or more DRAMs 50 and an (optional) external SRAM 41.

The chip 10 includes a processing unit 12 and a memory unit 40, which is termed as on-chip memory accordingly. The one or more DRAMs 50 are electrically connected via electrical connection lines 51 of a circuit board being part of the traffic manager 1 via an interface 13 with said chip 10. The processing unit 12 implements the processing functions of the traffic manager 1. The unit may either be dedicated hardware or have a programmable structure.

The processing unit 12 is connected with the on-chip memory 40 which is a memory comprised by the same chip as the processing unit 12, i.e. the chip 10, and the optional SRAM 41. As the on-chip memory 40 is located on the same chip 10 as the processing unit 12, the memory bandwidth to the on-chip memory 40 is a high memory bandwidth, i.e. the data rate of the data to write on the on-chip memory 40 and of the data to read from the on-chip memory 40 from and to the traffic manager 11 is high. However, the storage capacity of the on-chip memory 40 is low due to technological restrictions, in particular due to the spatial restrictions the on-chip memory 40 and the on-chip memory bandwidth can not be increased to any extent.

The traffic manager 1 comprises one or more DRAMs 50 which are connected by electrical connection lines 51 via the interface 13 to the processing unit 12. The DRAMs 50 are of high memory capacity in comparison with the on-chip memory 40. So much more data can be stored in a DRAM 50 than in the on-chip memory 40. The capacity of the data storage of the DRAM 50 is further increased by the use of more than one, in particular several DRAMs 50 of which for exemplary reasons three DRAMs 50 are depicted in fig. 1. The DRAMs 50 are connected to the chip 10 via connection lines 51 of the circuit board being part of the traffic manager 1. The more the memory bandwidth of a DRAM 50 is increased the more connection lines 51 are needed each corresponding to a pin where the connection line is fixed on the DRAM 50. In case of ASICs up to 2000 pins are used which provide the connection of the DRAM 50 with the circuit board of the traffic manager 1. On the chip 10 the interface 13 is connected with the processing unit 12. Via the interface 13 the data can be written and read to and from the traffic manager 1 to and from the one or more DRAMS 50. As depicted in Fig. 1 the flashes 42 and 43 indicate the input and the output to and from the traffic manager respectively.

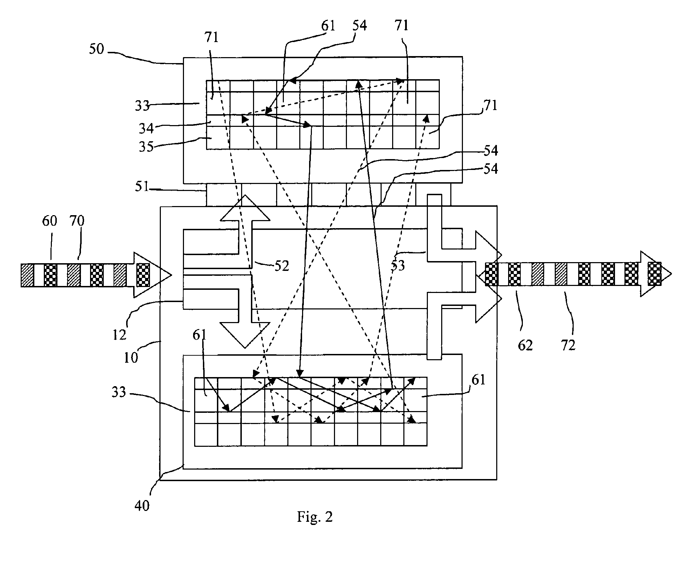

Fig. 2 shows in more detail again the processing unit 12 and the on-chip memory 40 provided by the chip 10 as well as one of the one or more DRAMs 50 electrically connected with said chip 10 via connection lines 51. The on-chip memory 40 has a higher memory bandwidth than the DRAM 50, preferably a bandwidth that is 100% higher than the memory bandwidth of the DRAM 50. The memory space of the on-chip memory 40 as well as of the DRAM 40 is divided into a plurality of memory segments 33. Fig. 2 further shows incoming data of two input data streams 60 and 70, queues 61 and 71 assigned for example to the respective input data stream 60 and 70, respectively. The queues 61 and 71 are provided by the on-chip memory 40 and one of the one or more DRAMs 50, whereby in fig. 2 for illustrative reasons only one DRAM 50 is depicted. The process of writing and reading of the data of the one or more queues in and from the on-chip memory 40 or in and from the DRAM 50 is indicated by the flashes 52 and 53 respectively.

The queue 61 assigned to the input data stream 60 and the queue 71 assigned to the input data stream 70 are implemented by the traffic manager 1 each as a linked list of memory segments 33. Each memory segment 33 comprises a payload data field 35 and a header 34. The header stores a pointer to the next element of the queue. Each linked list is composed by a plurality of memory segments 33 providing the elements of the queues. Each element of the queues comprises a pointer. The pointer points to the memory space, i.e. the memory segment 33, which is used to store the next element of the queue.

The linking of elements of the linked list is for illustrative reasons depicted only for the queues 61 and 71 by the pointers 54. The solid lines indicate the linking of the memory segments of the queue 61. The broken lines indicate the linking of the memory segments of the queue 71.

As depicted in fig. 2, the queue 61 assigned to the input data stream 60 is served by the processing unit 12 with high priority, because the first element of the queue 61 uses the on-chip memory 40. In contrast the queue 71 assigned to the input data stream 70 is served with low priority, because the first element of the queue 71 uses one of the one or more DRAMs 50.

The queue of high priority, i.e. the queue 61 in fig. 2, is served more frequently than the queue of low priority, i.e. the queue 71 in fig. 2. A queue of high priority is served in particular between 1.5 - 3 times more frequently than a queue of low priority. In fig. 2, the prioritised serving of the queue 61 over the queue 71 can be seen as the output data stream 62 assigned to the queue 61 comprises more data than the output data stream 72 assigned to the queue 71.

As depicted in fig. 2, the data of the queue 61 can use memory segments 33 of both the memory unit 40 of the chip 10 and of the one or more DRAMs 50 in an arbitrary order. In other cases instead of only one of the one or more DRAMs 50, more than one DRAM 50 is used by one queue beside the memory unit 40 of the chip 10 for buffering. As shown in fig. 2, the queue 61 is formed by elements stored in the memory unit 40 of the chip 10 and by elements stored in one of the one or more DRAMs 50. In the example depicted in fig. 2, the queue 71 is also formed by elements stored in the memory unit 40 of the chip 10 and by elements stored in one of the one or more DRAMs 50. But it is also possible that all elements of a queue are either stored in one of the one or more DRAMs 50 or in the memory unit 40 of the chip 10.

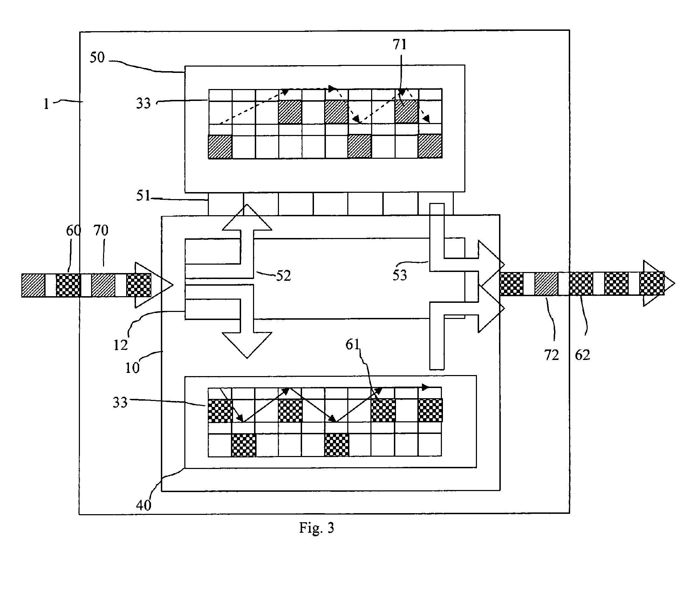

In an exemplary embodiment illustrated in fig. 3, the traffic manager 1 receives a first 60 and a second 70 input data stream being in this example of the same priority class and writes - within a first time period - the data of the queue 61 assigned to the first input data stream 60 in the memory unit 40 of the chip 10, whereby memory space 31 of the memory unit 40 of the chip 10 is used for the queue 61. Within the same first time period, the traffic manager 1 writes the data of the queue 71 assigned to the second input data stream 70 in one of the one or more DRAMs 50, whereby memory space 33 of the one of the one or more DRAMs 50 is used for the queue 71.

Within the first time period, the processing unit 12 serves the queue 61 assigned to the first input data stream 60 more frequently than the queue 71 assigned to the second input data stream 70, even the first 60 and the second 70 input data stream having the same priority class. For example, this is achieved by means of the aforementioned strategy. The processing unit 12 serves the queues according to memory in which the first element of each queue is written. The queue 61 assigned to the input data stream 60 is served by the processing unit 12 with high priority, because the first element of the queue 61 uses the on-chip memory 40. In contrast the queue 71 assigned to the input data stream 70 is served with low priority, because the first element of the queue 71 uses one of the one or more DRAMs 50. Alternatively, the priority given to a queue can be predetermined for a given time period, i.e. in a first time period, for exemplary reason the queue 61 is served with high priority, while the queue 71 is served with low priority, and in the following time period the queue 61 is served with low priority, while the queue 71 is served with high priority. In a further following time period, the priority can be switched again. The time periods can be of equal or of different length, in particular predetermined due to the requests of the user, the manufacturer and/or the telecom operator.

As can be seen in fig. 3 by the comparison between the output data streams 62 and 72 corresponding to the queues 61 and 71 respectively, the queue 61 is served more frequently than the queue 71.

Preferably, the traffic manager 1 is adapted to rearrange the writing of the data of the queues assigned to the first and second input data stream in the memory unit 40 of the chip 10 and in the one or more DRAMs 50 respectively to keep long term fairness within a second time period that is greater than the first time period.

Preferably, the traffic manager 1 is adapted to write new incoming data of the first and second input data stream either in the one or more DRAMs 50 or in the memory unit 40 of the chip 10 and link them with the rest of the queue assigned to the first and second input data stream, respectively.

Preferably, the traffic manager is adapted to rearrange the writing of the data of one or more of the queues by writing the data of a queue, of which the data has been written in the memory unit 40 of said chip, in the one or more DRAMs 50, and/or by writing the data of a queue, of which the data has been written in the one or more DRAMs 50, in the memory unit 40 of the chip.

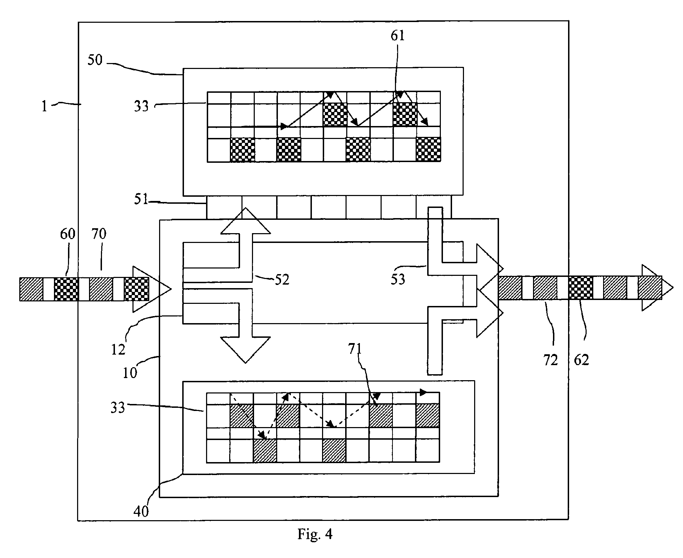

In the illustrative example depicted in fig. 4, the writing of the data of the queues 61 and 71 is rearranged. The data of the queue 61 of which the data has been written in a first time period in the memory unit 40 of the chip 10 (Fig. 3) is in the following period written in the one of the one or more DRAMs 50 (Fig. 4) and the data of the queue 71 of which the data has been written in one of the one or more DRAMs 50 in the first time period (Fig. 3) is in the following period written in the memory unit 40 of the chip 10 (Fig. 4). By this rearrangement of the queues 61 and 71, the queue 71 is served with priority over the queue 61 as can be seen by the output data streams 62 and 72 corresponding to the queues 61 and 71 respectively.

Preferably, the processing unit 12 is adapted to rearrange the writing of the data of one or more of the queues at regular time intervals. The rearrangement of the writing of the data of the one or more queues, i.e. the changing of the priority of the serving of the respective queues can be made at regular time intervals which are predetermined, in particular according to the demands of the manufacturer or telecom operator of the traffic manager. So for example, within a first time period, the queue 61 is served more frequently than the queue 71 and in the following time period the queue 71 is served more frequently than the queue 61. The time intervals of the switching of the priority are regular, i.e. that the time periods may be of equal length or of different length but of a predetermined regularity, e.g. two short time periods followed by two long time periods or a long time period followed by a short time period or another regular time pattern.

Preferably, the processing unit 12 is adapted to rearrange the writing of the data of one or more of the queues according to the memory bandwidth of the memory unit 40 of said chip 10 and/or of the one or more DRAMs 50. The changing of the priority can be made, in particular in order not to overburden the memory bandwidth of a buffer memory to avoid overload situation which leads to packet loss and in the same time to use the memory bandwidth in particular of the memory unit 40 of the chip 10 as far as possible, because thereby a high data throughput through the traffic manager 1 is achieved. If, for exemplary reasons, due to the writing of the data of both the queues 61 and 71 to one or more DRAMs 50 within a given time period, the memory bandwidth to the one or more DRAMs 50 is overburdened which could lead or leads to packet loss, the data of the queue 61 is written in the memory unit 40 of the chip 10 of which the memory bandwidth is high so that packet loss can be avoided.

Preferably, the traffic manager 1 is adapted to rearrange the writing of the data of one or more of the queues according to the memory occupancy of the memory unit 40 of said chip 10 and/or of the one or more DRAMs 50. By taking the memory occupancy of the buffer memories into account, the advantage of increased throughput through the traffic manager 1 is provided as far as possible by using the memory capacity of the buffer memories as far as possible while avoiding packet loss at the same time. If, for exemplary reasons, the data of both the queues 61 and 71 are written in the memory unit 40 of the chip 10, and therefore the memory occupancy of the memory unit 40 of the chip 10 is overburdened, in particular due to the low memory capacity of the memory unit 40 of the chip 10, the data of the queue 61 is written in the one or more DRAMs 50.

Preferably, the processing unit 12 is adapted to write the data of the queues assigned to input data streams of a high priority class in the memory unit 40 of said chip 10. If for exemplary reason, the input data stream 60 contains data of a high priority class according to the type of data, in particular real time data which are expected to leave the traffic manager 1 as soon as possible to avoid packet loss and to keep the quality of service guaranteed to this kind of data, the data of the queue 61 assigned to the input data stream 60 is written in the memory unit 40 of the chip 10 where it is served with priority, i.e. more frequently than the queue 71 written in the one or more DRAMs 50, because the queue 71 contains data of a low priority class, such as e-mail or other non real time data. Among the input data streams of a high priority class of the queue 61 which is therefore served with priority over the queue 71 are e.g. high value services as video conferencing, VoIP, partly payTV.

Preferably, the reallocation of the writing of the data of a queue, for exemplary reasons of the queue 61, is done at a moment that the data of the queue 61 has been totally or at least almost totally read out of the memory space e.g. 33 of one of the one or more DRAMs 50 used by the queue 61 in a first time period, so that the queue 61 provided in said DRAM 50 in the first time period has been run empty or nearly empty. In the following time period, new incoming data of the input data stream 60 to which the queue 61 is assigned is written e.g. in the memory unit 40 of the chip 10. As the data stored in the DRAM 50 in the first time period is already totally or almost totally read out of the DRAM 50, when the new data is written in the memory unit 40 of the chip 10 in the following time period, packet loss of data of the queue 61 is avoided as far as possible.

## Claims

1. A traffic manager (1) of a packet based communication network comprising a processing unit (12) of a chip (10) of the traffic manager (1), one or more first memory units (50) electrically connected via electrical connection lines (51) of a circuit board with said chip (10), a second memory unit (40) and one or more queues (61, 71) assigned to respective input data streams (60, 70), wherein at least one of said one or more queues (61, 71) being provided by the second memory unit (40) or provided by the second memory unit (40) and the one or more first memory units (50), whereby the second memory unit (40) has a higher memory bandwidth than the one or more first memory units (50).

2. A traffic manager (1) according to claim 1, wherein the first memory unit (50) is a DRAM and the second memory unit (40) is a memory unit (40) of said chip (10).

3. A traffic manager (1) according to claim 1, wherein the processing unit (12) is adapted to implement each of said one or more queues (61, 71) as a linked list of a plurality of elements, wherein each element of the queue comprises payload data and a pointer (54) to the next element of the queue.

4. A traffic manager (1) according to claim 1, wherein the processing unit (12) is adapted to serve a queue (61) of said one or more queues (61, 71) with high priority, if the first element of the queue (61) uses the second memory unit (40), and/or to serve a queue (71) of said one or more queues (61, 71) with low priority, if the first element of the queue (71) uses the one or more first memory units (50).

5. A traffic manager (1) according to claim 4, wherein the processing unit (12) is adapted to serve a queue of high priority more frequently than a queue of low priority, in particular between 1.5 - 3 times more frequently.

6. A traffic manager (1) according to claim 1, wherein the processing unit (12) is adapted to distribute the data of at least one of the one or more queues (61, 71) to both, the second memory unit (40) and the one or more first memory units (50), whereby each one of said queues (61, 71) is formed by elements stored in said second memory unit (40) and by elements stored in the one or more first memory units (50).

7. A traffic manager (1) according to claim 1, wherein the processing unit (12) is adapted to receive at least a first input data stream (60) of said input data streams (60, 70) and at least a second input data stream (70) of said input data streams (60, 70), the first input data stream (60) and the second input data stream (70) having the same priority class, to write - within a first time period - the data of the queue (61) assigned to the first input data stream (60) in the second memory unit (40), whereby memory space of the second memory unit (40) is used for said queue (61), and to write - within the first time period - the data of the queue (71) assigned to the second input data stream (70) in the one or more first memory units (50), whereby memory space of the one or more first memory units (50) is used for said queue (71).

8. A traffic manager (1) according to claim 7, wherein - within the first time period - the queue (61) assigned to the first input data stream (60) is served more frequently than the queue (71) assigned to the second input data stream (70) even the first (60) and the second (70) input data stream having the same priority class.

9. A traffic manager (1) according to claim 7, wherein the traffic manager (1) is adapted to rearrange the writing of the data of the queues (61, 71) assigned to the first (60) and second (70) input data stream in the second memory unit (40) and in the one or more first memory units (50), respectively, to keep long term fairness within a second time period that is greater than the first time period.

10. A traffic manager (1) according to claim 9, wherein the processing unit (12) is adapted to write new incoming data of the first and second input data stream either in the first memory unit (50) or the second memory unit (40) and link them with the rest of the queue assigned to the first and second input data stream, respectively.

11. A traffic manager (1) according to claim 9, wherein the processing unit (12) is adapted to rearrange the writing of the data of one or more of the queues (61, 71) at regular time intervals.

12. A traffic manager (1) according to claim 9, wherein the processing unit (12) is adapted to rearrange the writing of the data of one or more of the queues (61, 71) according to the memory bandwidth of the second memory unit (40) and/or of the one or more first memory units (50).

13. A traffic manager (1) according to claim 9, wherein the processing unit (12) is adapted to rearrange the writing of the data of one or more of the queues (61, 71) according to the memory occupancy of the second memory unit (40) and/or of the one or more first memory units (50).

14. A traffic manager (1) according to claim 1, wherein the processing unit (12) is adapted to write the data of the queues assigned to input data streams of a high priority class in the second memory unit (40), in particular the data of queues assigned to high value services as video conferencing, VoIP, partly payTV.

15. A method of controlling a traffic manager (1) of a packet based communication network, comprising a processing unit (12) of a chip (10) of said traffic manager (1) and one or more first memory units (50) electrically connected via electrical connection lines (51) of a circuit board with said chip (10), the method comprising the steps of assigning one or more queues (61, 71) to respective input data streams (60, 70) and of providing at least one of the one or more queues (61, 71) by a second memory unit (40) or by a second memory unit (40) and the one or more first memory units (50), whereby the second memory unit (40) has a higher memory bandwidth than the one or more first memory units (50).
